# EUROPÄISCHE PATENTANMELDUNG

(11) **EP 2 404 587 A2**
(43) Veröffentlichungstag der Anmeldung: **11.01.2012**
(21) Anmeldenummer: 11171832.6
(22) Anmeldetag: 29.06.2011
(51) Int. Cl.: A61J 1/10

(54) **Kunststofftüte zur kontaminationsfreien Aufnahme eines Infusionsbehältnisses und Schweißeinheit zu deren Herstellung**

(30) Priorität: 05.07.2010 DE 202010009843 U
(71) Anmelder: Keuchel, Josef, 86929 Penzing/Oberbergen (DE)
(72) Erfinder: Keuchel, Josef, 86929 Penzing/Oberbergen (DE)
(74) Vertreter: Alber, Norbert

(57) **Zusammenfassung**

Die Erfindung betrifft eine Kunststofftüte (11) zur kontaminationsfreien Aufnahme eines Infusionsbehältnisses (17) mit wenigstens einem Injektionsport (23), der am Entnahmeende der Tüte (11) nach Öffnen einer Verschlussnaht (13) nahe dem Entnahmeende (19) der Tüte (11) an ein Injektionsbesteck anschließbar ist, und mit Aufhängemitteln (18) an dem dem Entnahmeende (19) entgegengesetzten Aufhängeende (20) der Tüte (11). Diese Tüte soll so ausgebildet werden, dass eine sichere Aufnahme eines Infusionsbehältnisses bei möglichst hoher Kontaminationsfreiheit gewährleistet wird und ein sicheres und einfaches Anschließen eines Injektionsbestecks an ein in der Tüte befindliches Infusionsbehältnis ermöglicht wird. Dies wird dadurch erreicht, dass die Verschlussnaht (13) eine irreversible Schweißnaht ist, die wenigstens eine Unterbrechungsöffnung (15) zur Aufnahme des wenigstens einen Injektionsports (23) aufweist, und dass sich am Entnahmeende (19) der Tüte (11) eine weitere, irreversible Schweißnaht (12) befindet. Die Erfindung betrifft auch eine Schweißeinheit zur Herstellung, zum Befüllen und zum Verschließen einer solchen Tüte.

## Beschreibung

Die Erfindung betrifft eine Kunststofftüte entsprechend dem Oberbegriff des Anspruchs 1 sowie eine Schweißeinheit zum Herstellen, zum Befüllen und zum Verschließen der Tüte.

Aus DE 102009019616 ist eine Kunststofftüte dieser Art bekannt, die im Bereich des Entnahmeendes eine V-förmige Versiegelungsnaht aufweist, die aufreißbar ist, um ein Infusionsbehältnis in der Tüte an ein Injektionsbesteck anschließen zu können.

Der Nachteil dieser Tüte besteht darin, dass diese Verschlussnaht nicht definiert aufgerissen werden kann, so dass, wenn sie zu weit aufgerissen wird, das Infusionsbehältnis aus der Tüte fällt. Ein weiterer Nachteil besteht darin, dass, da diese Verschlussnaht nur eine begrenzte Festigkeit hat, die Möglichkeit besteht, dass das Infusionsbehältnis nach Öffnen der Verschlussnaht aufgrund seines Gewichts diese weiter aufreißt und herausfällt.

Der Erfindung liegt die Aufgabe zugrunde, eine Tüte der eingangs genannten Art so auszubilden, dass eine sichere Aufnahme eines Infusionsbehältnisses bei möglichst hoher Kontaminationsfreiheit gewährleistet wird und ein sicheres und einfaches Anschließen eines Injektionsbestecks an ein in der Tüte befindliches Infusionsbehältnis ermöglicht wird.

Weiterhin soll eine Schweißeinheit geschaffen werden, mit der es möglich ist, auf einfache Art Tüten der eingangs genannten Art herzustellen, kontaminationsfrei zu befüllen und zu verschließen. Gelöst wird diese Aufgabe gemäß der Erfindung durch die im kennzeichnenden Teil des Anspruchs 1 angegebenen Merkmale bzw. durch die Merkmale des Anspruchs 4. Zweckmäßige Ausgestaltungen der Erfindung ergeben sich aus den Unteransprüchen.

Durch Ausbilden der Verschlussnaht als eine irreversible Schweißnaht ist sichergestellt, dass ein unbeabsichtigtes Öffnen der Tüte am Entnahmeende verhindert wird. Um aber ein Infusionsbehältnis an ein Injektionsbesteck anschließen zu können, hat die Schweißnaht, um z.B. eine Infusionsflasche mit nur einem Injektionsport anschließen zu können, eine Unterbrechungsöffnung. Weiterhin ist am Entnahmeende eine weitere, irreversible Schweißnaht als weitere Verschlussnaht vorgesehen. Zum Anschließen eines Infusionsbehältnisses wird die Tüte zwischen beiden Verschlussnähten am Entnahmeende durchtrennt, so dass die Unterbrechungsöffnung zum Anschließen an ein Injektionsbesteck freigelegt wird. Zweckmäßigerweise ist zwischen den beiden Verschlussnähten eine Trennlinie zum Durchtrennen aufgedruckt.

Infusionsbehältnisse werden normalerweise in zwei Arten verwendet, nämlich in Form einer Infusionsflasche mit einem Injektionsport und in Form von Infusionsbeuteln mit zwei Injektionsports. Zweckmäßigerweise hat daher die Verschlussnaht nahe dem Entnahmeende der Tüte nicht nur eine, sondern zweckmäßigerweise zwei Unterbrechungsöffnungen.

Zum Aufhängen der befüllten Tüte ist am Befüllende eine Aufhängeöffnung ausgebildet. Falls die Tüte für die beiden zuvor erwähnten Arten von Infusionsbehältnissen bestimmt ist, werden zweckmäßigerweise zwei solche Aufhängeöffnungen vorgesehen, die jeweils auf eine Infusionsflasche bzw. einen Infusionsbeutel ausgerichtet.

Vor und hinter der Aufhängeöffnung bzw. den Aufhängeöffnungen befindet sich zweckmäßigerweise eine aufgedruckte Querlinie, um die Tüte nach dem Befüllen durch irreversible Schweißnähte sicher zu verschließen.

Am Befüllende kann noch ein Griffband vorgesehen sein, das beim manuellen Befüllen der Tüte erfasst werden und das nach dem Verschließen der Tüte abgetrennt werden kann.

Das Ausgangsmaterial der Tüten kann in Form von aufgerollten Vorformlingen vorliegen, die die beiden Verschlussnähte am Entnahmeende und das abtrennbare Griffband am Befüllende aufweisen. Die Vorformlinge sind dabei mit dem Entnahmeende und dem Befüllende in Aufrollrichtung angeordnet.

Es besteht auch die Möglichkeit, die Tüten im Gegensatz zu der vorher beschriebenen Ausführungsform in Querrichtung anzuordnen. In diesem Falle sind die Vorformlinge zweckmäßigerweise am Befüllende durch ein Transportband verbunden, das von der Unterseite der Tüte gebildet wird. Die Oberseite der Tüte kann dann in Form einer Greiflasche umgelegt sein, die zum maschinellen oder manuellen Öffnen der Tüte geeignet ist.

Bei den bisher beschriebenen Ausführungsformen ist das Befüllende der Tüten gleichzeitig das Aufhängeende. Es ist aber auch möglich, die Tüten so anzuordnen, dass das Aufhängeende nicht gleichzeitig das Befüllende ist. In diesem Falle sind die Tüten mit dem Aufhängeende und dem Entnahmeende in Aufrollrichtung angeordnet und haben bereits alle erforderlichen Verschlussnähte und Aufhängeöffnungen und sind an einem der Seitenränder durch ein von der Unterseite gebildetes Transportband verbunden, dem eine Greiflasche zugeordnet ist. In diesem Falle erfolgt die Befüllung der Tüte seitlich. Das Transportband kann einen abgedeckten Klebestreifen aufweisen, um die Tüte zu verschließen. Es ist auch möglich, im Bereich der Greiflasche an der Innenseite einen abgedeckten Klebestreifen zum Verschließen vorzusehen.

Am Transportband können Aufhängeöffnungen vorgesehen sein, so dass die Tüte seitlich aufhängbar ist.

Tüten, die mit einem Transportband versehen sind, eignen sich für das maschinelle Zuführen der Tüten von einer Rolle, aber auch je nach Ausführungsform zum maschinellen Öffnen mittels der Greiflasche und zum Befüllen über die geöffnete Tüte.

Zum Herstellen, zum Befüllen und zum Verschließen von Tüten der anfangs erläuterten Art kann eine Schweißeinheit verwendet werden, die einen Schweißbalken aufweist, der Schweißelemente zum Erstellen der Schweißnähte am Entnahmeende und am Befüll- bzw. Aufhängeende und der Aufhängeöffnungen sowie eine Schneideinrichtung hat.

Das Ausgangsmaterial der Tüten kann in Form einer Schlauchkassette vorliegen, durch deren zentrale Öffnung das Schlauchende über eine Rutsche zur Schweißeinheit und in dieser entsprechend der Größe eines Infusionsbehältnisses bis zu einer bestimmten Stelle gezogen wird.

Besonders günstig erweist es sich hierbei hinsichtlich der Kontaminationsfreiheit, dass das Befüllen der Tüte über die zentrale Öffnung der Schlauchkassette erfolgen kann.

Die Schlauchkassette kann an einer frontalen oder seitlichen Öffnung einer Sicherheitswerkbank, in der die Infusionsbehältnisse befüllt werden, lösbar befestigt werden. Es ist aber auch möglich, die Kassette an einer Halterung zu befestigen, die mit der Schweißeinheit verbunden ist. Das Einfüllen der Infusionsbehältnisse erfolgt bei dieser Ausführungsform aus der Sicherheitswerkbank direkt über die zentrale Öffnung der Schlauchkassette.

Die Erfindung wird nachstehend anhand der Fig. 1 bis 11 beispielsweise erläutert.

Es zeigt:
Fig. 1: eine Aufsicht einer Tüte mit vorgefertigten Schweißnähten und den Positionen noch zu erstellender Schweißnähte,
Fig. 2: eine Aufsicht zweier zusammenhängender Vorformlinge einer Tüte, die aufrollbar sind,
Fig. 3+4: Fig. 1 entsprechende Darstellungen, aus denen die Lage zweier unterschiedlicher Infusionsbehältnisse in einer Tüte hervorgeht,
Fig. 5+6: Fig. 1 und 2 entsprechende Darstellungen, bei denen die Tüten Vorformlinge um 90° gedreht aufrollbar sind,
Fig.7+8: Fig. 5 und 6 entsprechende Darstellungen von Tüten, die seitlich befüllbar sind,
Fig. 9: eine schematische Darstellung einer an eine Sicherheitswerkbank angeschlossenen Schweißeinheit,
Fig. 10: eine weitere schematische Darstellung der Schweißeinheit und eines Schweißbalkens, und
Fig. 11: eine Aufsicht und eine Seitenansicht einer Schlauchkassette.

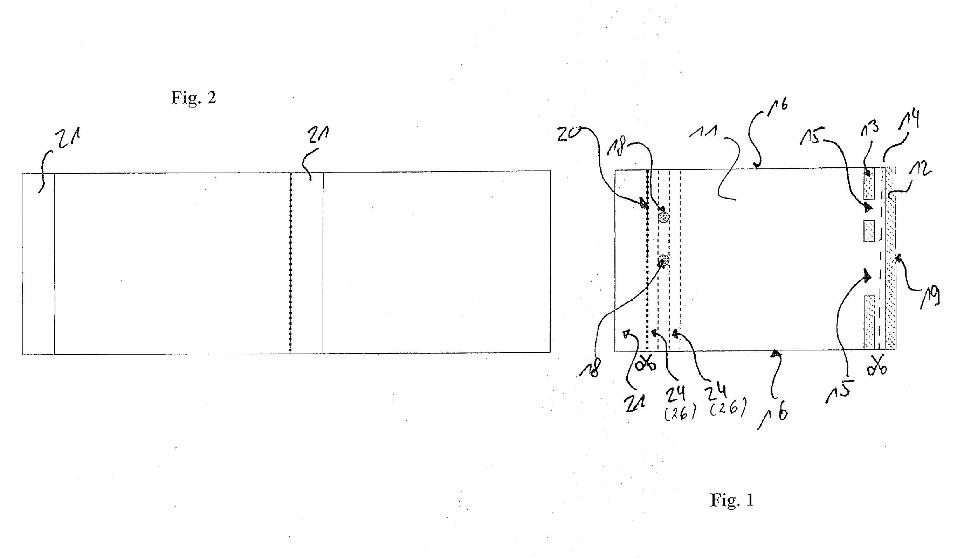

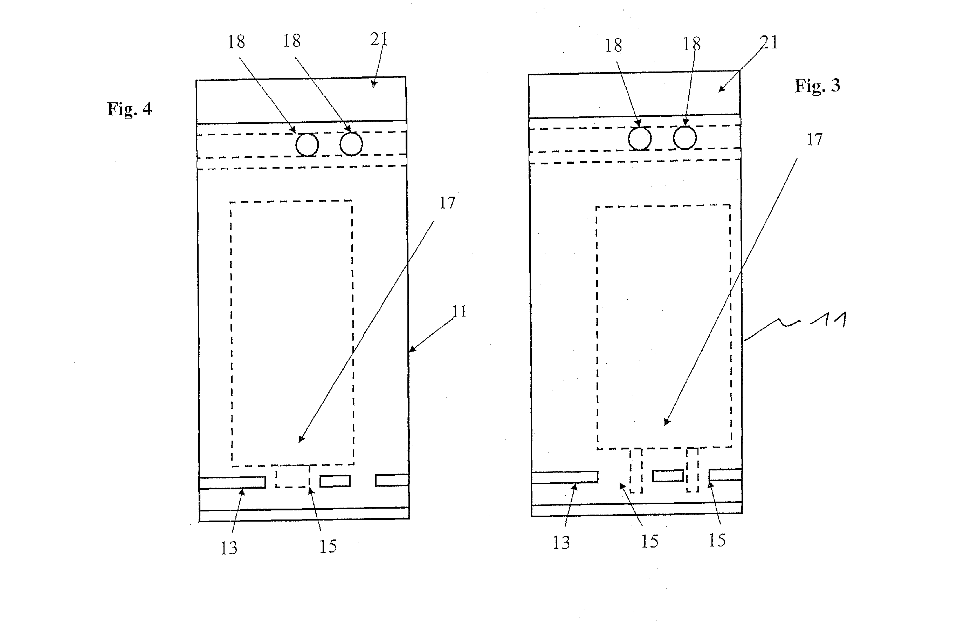

Fig. 1 zeigt die erfindungsgemäße Tüte 11, die am Entnahmeende 19 eine irreversible Schweißnaht 12 als Verschlussnaht und davor eine weitere irreversible Schweißnaht 13 aufweist, die zwei Unterbrechungen 15 zur Aufnahme eines Infusionsbehältnisses 17 mit einem oder zwei Injektionsports hat. Die Lage solcher Infusionsbehältnisse 17 ist in den Fig. 3 und 4 gezeigt. Zwischen beiden Schweißnähten 12, 13 ist eine Trennlinie 14 zum Durchtrennen beim Öffnen der Tüte 11 aufgedruckt.

Am dem Entnahmeende 19 gegenüberliegenden Aufhänge- und Befüllende 20 befinden sich Aufhängeöffnungen 18. Weiterhin sind Querlinien 24 zum Positionieren von irreversiblen Schweißnähten 26 nach dem Befüllen der Tüte 11 aufgedruckt. Weiterhin hat die Tüte am Befüllende ein Griffband 21, das nach dem Befüllen und Verschließen der Tüte abgetrennt werden kann.

Wie Fig. 2 zeigt, können die Tüten fortlaufend verbunden sein und können am Griffband 21 vereinzelt werden.

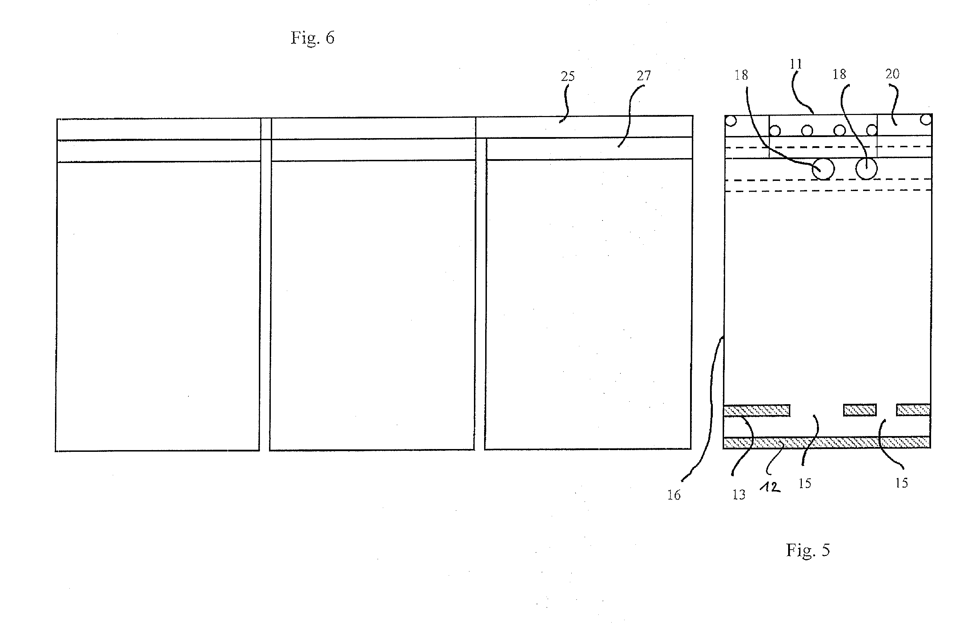

Fig. 5 und 6 zeigt eine Ausführungsform der Tüte 11, die zu der Ausführungsform der Fig. 1 bis 4 um 90° gedreht ist, d. h., dass im Gegensatz zu den Seitenrändern 16 der Ausführungsform der Fig. 1 bis 4 die Seitenränder 16 nun quer zur Aufrollrichtung der Vorformlinge liegen.

Die Vorformlinge der Tüte sind am Aufhänge- und Befüllende 20 durch ein Transportband 25 verbunden, das von der Unterseite der Vorformlinge gebildet wird. Die Oberseite der Vorformlinge bildet eine umgelegte Greiflasche 27, mittels der die Tüte zum Befüllen maschinell oder manuell geöffnet werden kann. Selbstverständlich sind die Vorformlinge bereits mit den Schweißnähten 12, 13 versehen.

Das Transportband 25 kann mit einem nicht gezeigten abgedeckten Klebeband versehen sein, um die Tüte durch Umlegen des Transportbands verschließen zu können. Es ist aber auch möglich, im Bereich der Greiflasche 27 an der Innenseite der Tüte ein abgedecktes Klebeband zu verwenden, um die Tüte zu verschließen.

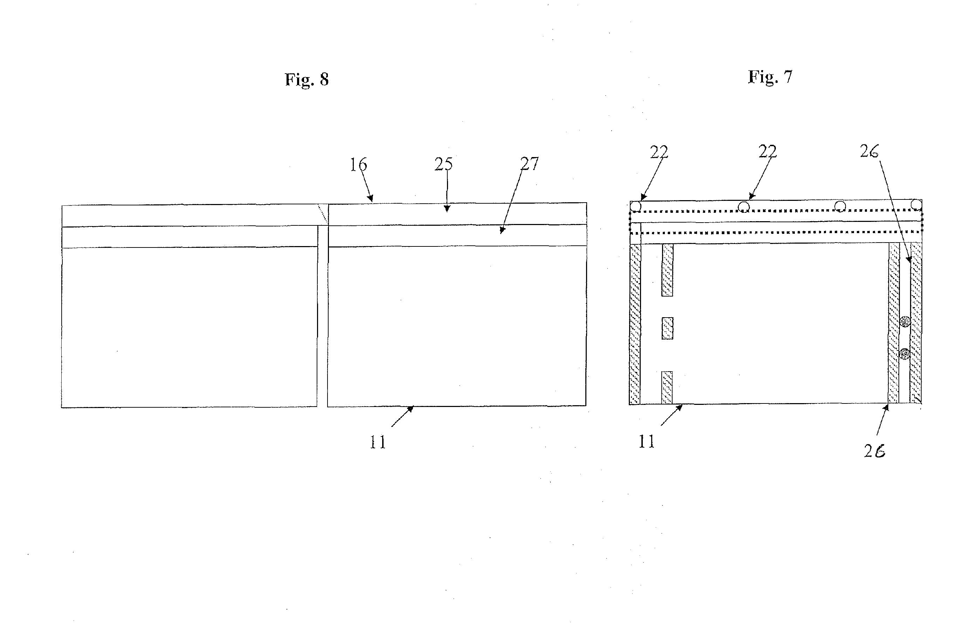

Die Fig. 7 und 8 zeigen eine Ausführungsform der Tüte 11, die entsprechend der den Fig. 1 bis 4 angeordnet ist, bei der jedoch die Vorformlinge bereits alle erforderlichen Schweißnähte und Öffnungen aufweisen.

An einem der Seitenränder 16 ist wie bei der Ausführungsform der Fig. 5 und 6 ein Transportband 25 ausgebildet, dem eine Greiflasche 27 zugeordnet ist. Bei dieser Ausführungsform ist das Aufhängeende nicht gleichzeitig das Befüllende der Tüte 11, das sich vielmehr seitlich am Transportband 25 befindet und wo auch die Greiflasche 27 ausgebildet ist.

Eine derartige Tüte kann an am Transportband 25 ausgebildeten Aufhängeöffnungen 22 aufgehängt werden, nachdem sie durch ein der Greiflasche 27 zugeordnetes Klebeband verschlossen wurde.

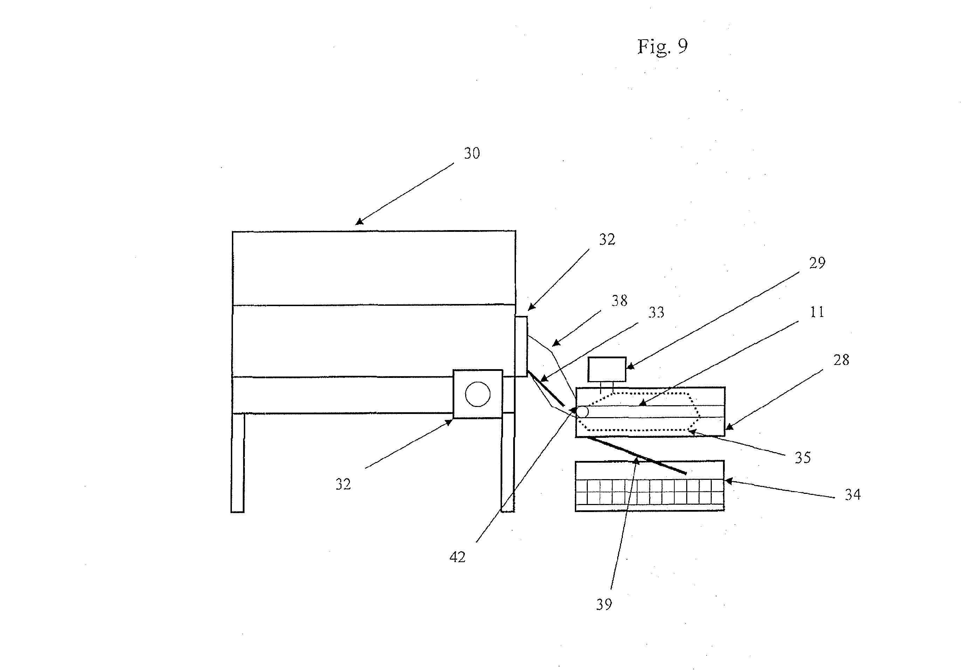

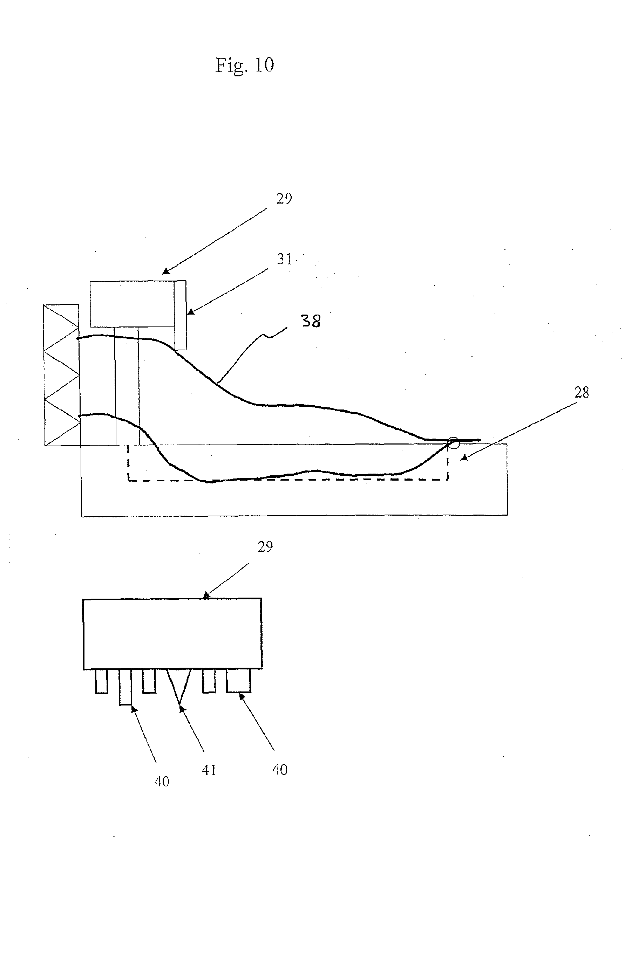

Die Fig. 9 und 10 zeigen eine Schweißeinheit 28 zum Herstellen, Befüllen und Verschließen von Tüten 11 der Ausführungsform der Fig. 1 bis 4. Wie Fig. 9 zeigt, kann die Schweißeinheit 28 an eine Sicherheitswerkbank 30 bzw. einen Isolator angeschlossen werden.

Die Schweißeinheit hat einen Schweißbalken 29, eine wannenförmige Tütenauflage 35, eine Abwurfklappe 39, einen Auffangkorb 34, eine Greif- und Transporteinrichtung 42, eine Rutsche 33 sowie eine Schlauchkassette 32, die lösbar seitlich an der Sicherheitswerkbank 30 befestigt ist.

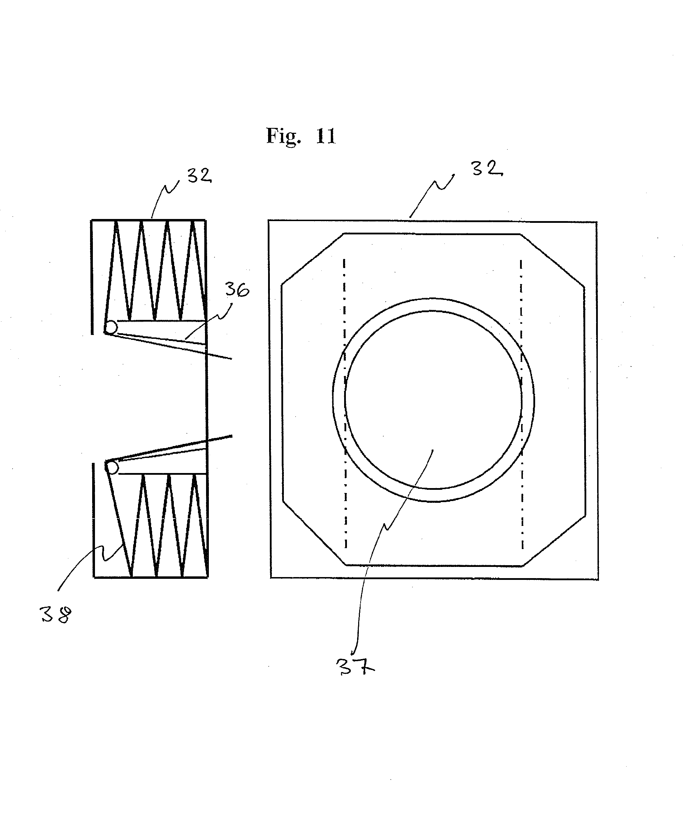

Das schlauchförmige Ausgangsmaterial der Tüten 11 befindet sich in Form eines Schlauchs 38 in der in Fig. 11 gezeigten Kassette 32, die eine zentrale Öffnung 37 sowie einen Trichter 36 in der zentralen Öffnung 37 hat.

Am Beginn der Herstellung einzelner Tüten wird der aus der Schlauchkassette 32 vorstehende Schlauch 38 aus der Kassette und dabei über die Rutsche 33 diese umgebend gezogen. Die Rutsche 33 ist abnehmbar an der Schlauchkassette 32 oder einem Adapter an der Sicherheitswerkbank 30 befestigt.

Der Schlauch 38 wird dann in die Greif- und Transporteinrichtung 42 am linken Ende der wannenförmigen Tütenauflage 35 eingeführt und durch eine entsprechende Steuerung automatisch nur so weit nach rechts transportiert, dass der Schweißbalken 29 betätigt werden kann. Der Schweißbalken 29 hat, wie in Fig. 10 unten gezeigt ist, Schweißelemente 40 und eine Schneideinrichtung 41. Die beiden Schweißelemente 40 rechts von der Schneideinrichtung 41 dienen dazu, die Schweißnähte 12 und 13 der Tüte am Entnahmeende 19 der Fig. 1 zu fertigen, während die drei Schweißelemente 40 links von der Schneideinrichtung 41 dazu dienen, die Aufhängeöffnungen 18 und die Schweißnähte 26 entsprechend den Querlinien 24 in Fig. 1 am Aufhängeende 20 zu fertigen.

Wenn also der Schweißbalken 29 am Beginn der Herstellung betätigt wird, wird der Anfang des Schlauchs 38 mit den Schweißnähten 12 und 13 versehen. Dieser Teil wird abgetrennt und entsorgt. Danach oder gleichzeitig werden die Schweißelemente 40 links von der Schneideinrichtung 41 des Schweißbalkens 29 betätigt und die Herstellung der ersten Tüte beginnt damit. Das geschweißte Aufhängeende 20 wird automatisch entsprechend der Größe des aufzunehmenden Infusionsbehältnisses 17 von der Greif- und Transporteinrichtung 42 nach rechts gezogen. Anschließend wird ein Infusionsbehältnis 17 über die zentrale Öffnung 37 der Schlauchkassette 32 mit dem Injektionsport 23 bzw. den Injektionsports 23 hinten liegend in den Schlauch über die Rutsche 33 in den Teil des Schlauchs 38, der sich auf der wannenförmigen Tütenauflage 35 befindet, eingeführt. Das Einführen des Infusionsbehältnisses 17 erfolgt über eine seitliche Öffnung der Sicherheitswerkbank 30, an die die Schlauchkassette 32 angeschlossen ist.

Danach wird der Schweißbalken 29 wieder betätigt, wobei ein am rechten Ende des Schweißbalkens 29 befindlicher Niederhalter 31 (Fig. 10) den auf der wannenförmigen Tütenauflage 35 befindlichen Schlauch niederdrückt und gleichzeitig prüft, ob das Infusionsbehältnis 17 ausreichend weit eingeschoben wurde, um eine Beschädigung zu verhindern. Dann werden die Schweißelemente 40 und die Schneideinrichtung 41 betätigt, so dass die erste befüllte Tüte verschlossen wird und gleichzeitig das Aufhängeende 20 der nächstfolgenden Tüte in der erforderlichen Weise ausgebildet wird.

Die abgetrennte, befüllte und verschlossene Tüte 11 kann dann über die Abwurfklappe 39 in den Auffangkorb 34 gelangen, der über die Steuerung der Schweißeinheit entsprechend der Füllmenge verfahrbar ist.

Bei dieser Art der Herstellung der Tüte besteht der wesentliche Vorteil darin, dass die Infusionsbehältnisse zum Einfüllen in Tüten direkt aus der Sicherheitswerkbank zugeführt werden können, so dass die Kontaminationsgefahr verringert wird.

Weiterhin ist das Griffband 21 der Tüte der Ausführungsform der Fig. 1 nicht mehr erforderlich, da die Tüte zum Befüllen an diesem Ende nicht mehr gehandhabt werden muss.

## Patentansprüche

1. Kunststofftüte (11) zur kontaminationsfreien Aufnahme eines Infusionsbehältnisses (17) mit wenigstens einem Injektionsport (23), der am Entnahmeende der Tüte (11) nach Öffnen einer Verschlussnaht (13) nahe dem Entnahmeende (19) der Tüte (11) an ein Injektionsbesteck anschließbar ist, und mit Aufhängemitteln (18) an dem dem Entnahmeende (19) entgegengesetzten Aufhängeende (20) der Tüte (11),
**dadurch gekennzeichnet, dass**
die Verschlussnaht (13) eine irreversible Schweißnaht ist, die wenigstens eine Unterbrechungsöffnung (15) zur Aufnahme des wenigstens einen Injektionsports (23) aufweist, und dass sich am Entnahmeende (19) der Tüte (11) eine weitere, irreversible Schweißnaht (12) befindet.

2. Tüte (11) nach Anspruch 1,
**dadurch gekennzeichnet, dass**
die irreversible unterbrochene Schweißnaht (13) zwei Unterbrechungsöffnungen (15) zur wahlweisen Aufnahme eines Infusionsbehältnisses (17) in Form einer Infusionsflasche mit einem Injektionsport (23) oder eines Infusionsbeutels mit zwei Injektionsports (23) aufweist.

3. Tüte (11) nach Anspruch 1 oder 2,
**dadurch gekennzeichnet, dass**
die Aufhängemittel aus wenigstens einer Durchgangsöffnung (18) am Aufhängeende (20) bestehen.

4. Schweißeinheit (28) zur Herstellung, zum Befüllen und zum Verschließen **insbesondere** von Tüten (11) nach einem der Ansprüche 1-3, **gekennzeichnet durch**
einen Schweißbalken (29) zum Erstellen der irreversiblen Schweißnähte (12, 13) am Entnahmeende (19) einer Tüte (11) und der irreversiblen Schweißnähte (26) und der Durchgangsöffnung(en) (18) der nächstfolgenden Tüte (11).

5. Schweißeinheit (28) nach Anspruch 4,
**gekennzeichnet durch**
eine Schlauchkassette (32) mit einer zentralen Öffnung (37), der eine Rutsche (33) zum Zuführen eines Infusionsbehältnisses (17) **durch** die zentrale Öffnung (37) zugeordnet ist.

6. Schweißeinheit (28) nach Anspruch 5,
**gekennzeichnet durch**
einen Trichter (36) in der zentralen Öffnung (37) der Schlauchkassette (32).

7. Schweißeinheit (28) nach Anspruch 6,
**dadurch gekennzeichnet, dass**
der Trichter (36) als Rutsche ausgebildet ist.

8. Schweißeinheit (28) nach Anspruch 5 oder 6,
**dadurch gekennzeichnet, dass**
dass die Rutsche (33) zusammen mit der Schlauchkassette (35) an einer Sicherheitswerkbank (30) oder einem Isolator lösbar befestigbar ist.
